# EUROPEAN PATENT SPECIFICATION

(11) **EP 2 875 977 B1**
(45) Date of publication and mention of the grant of the patent: **28.02.2018**
(21) Application number: 14192195.7
(22) Date of filing: 07.11.2014
(51) Int. Cl.: B60H 1/00

(54) **Vehicle air conditioning apparatus**
Fahrzeugklimaanlagenvorrichtung
Appareil de climatisation d'air pour véhicule

(30) Priority: 12.11.2013 JP 2013234360
(43) Date of publication of application: 27.05.2015
(73) Proprietor: Valeo Japan Co., Ltd., Saitama 360-0193 (JP)
(72) Inventor: Nakajima, Nowaki, SAITAMA, 360-0193 (JP)
(74) Representative: Tran, Chi-Hai

(56) References cited:
- DE-A1- 19 928 834
- JP-A- 2003 034 125
- JP-A- 2004 218 819
- JP-A- 2004 268 906
- US-A1- 2005 056 397

## Description

### BACKGROUND OF THE INVENTION

### FIELD OF THE INVENTION

The present invention relates to a vehicle air conditioning apparatus provided with an air passage inside an air conditioning case and configured to control an air flow passing through the air passage with a plurality of doors, in which a link mechanism including one main link drives the plurality of doors in proximity thereto.

### DESCRIPTION OF RELATED ART

Patent Literature 1 discloses an example of a link mechanism mounted outside an air conditioning case having an air passage in the interior thereof, and configured to drive three doors in total, namely, a door for defrosting, a door for ventilation, and a door for foot, in a vehicle air conditioning apparatus. A link mechanism described in Patent Literature 1 includes a motor, a main link configured to be rotated by the motor, and three intermediate links configured to transmit the rotation of the main link to respective doors.

As a link mechanism for the vehicle air conditioning apparatus, Patent Literature 2 discloses a main link provided with cam grooves formed both on a surface facing an air conditioning case and a surface facing an actuator. In Patent Literature 2, the link mechanism includes a base, a main link, and an actuator arranged in this order from the side of the air conditioning case, and has a stacking structure.

As the link mechanism for the vehicle air conditioning apparatus, a structure including a bracket to be fixed to an air conditioning case, an actuator configured to be fixed to an outer surface of the bracket; a main link configured to be rotated by a rotating shaft which penetrates through the bracket from the actuator; and a plurality of intermediate links configured to engage the cam grooves on the main link and rotate doors arranged in an air passage of an air conditioning case, is disclosed, for example, in Patent Literature 3.

### CITATION LIST

### PATENT LITERATURE

Patent Literature 1: JP-A-4-71920
Patent Literature 2: JP-A-9-156346
Patent Literature 3: JP-A-2006-111119
Furthermore, patent document DE 199 28 834 A1, which is considered as the closest prior art, discloses a vehicle air conditioning apparatus according to the preamble of independant claim 1.

### SUMMARY OF THE INVNENTION

### PROBLEMS TO BE SOLVED BY THE INVENTION

In the link mechanism of Patent Literature 1, the actuator and the main link are arranged at different positions. The main link has a large shape and includes a plurality of projecting portions according to the number of the doors. The respective intermediate links to be engaged with the cam grooves formed on the projecting portions of the main link also have a large shape. Therefore, in the structure of the link mechanism of Patent Literature 1, the entire link mechanism is arranged so as to extend over an outer side surface of the air conditioning case, so that a problem that a large surface area is required for arrangement arises. In terms of this point, the link mechanism of Patent Literature 2 achieves a reduction in size by utilizing a space effectively by arranging the base, the main link and the actuator in a stacked manner, and providing the cam grooves on the front and the back of the main link.

However, in the link mechanism of Patent Literature 2, both of the intermediate link arranged on a surface of the main link facing the base and the intermediate link arranged on a surface of the main link facing the actuator are supported by link supporting portions provided on the base. Therefore, at least one of the link supporting portions which supports the intermediate link arranged on the surface of the main link facing the actuator needs to be arranged outside a movable range of the main link so as not to hinder the rotation of the main link. In other words, in the structure of the link mechanism of Patent Literature 2 as well, all of the link supporting portions of the intermediate links cannot be put together on a center-of-rotation side of the main link, so that the link mechanism is not sufficiently reduced in size.

In contrast, in the structure of the link mechanism of Patent Literature 3, a plurality of the intermediate links are arranged so as to be coupled only with one of surfaces (surface facing the air conditioning case) of the main link, and both of the front surface and the back surface of the main link are not used. Therefore, the space on the front surface of the main link is not effectively used. The link supporting portions configured to support the intermediate links are also arranged outside of the movable range of the main link (radially outside the rotating shaft). In this manner, the structure of the link mechanism of Patent Literature 3 does not achieve the reduction in size of the link mechanism.

Accordingly, it is an object of the invention to provide a vehicle air conditioning apparatus including an air passage formed inside an air conditioning case and configured to control an air flow passing through the air passage with a plurality of doors, and rotate the plurality of doors in proximity thereto with a link mechanism provided with one main link, wherein a plurality of intermediate links are put together on a center-of-rotation side of the main link, whereby a reduction in size of the link mechanism is achieved.

### MEANS FOR SOLVING THE PROBLEMS

A first aspect of the invention is directed to a vehicle air conditioning apparatus including all the features of independent claim 1. The motor is, for example, an electric motor or an actuator. The door includes, for example, a cantilever-door, a butterfly type door, and a rotary type door.

Since both of the first surface side link supporting portion and the second surface side link supporting portion are arranged within a movable range of the main link, all of the link supporting portions of the intermediate links may be put together on the center-of-rotation side of the main link, and the link mechanism may be reduced in size.

A second aspect of the invention is directed to the vehicle air conditioning apparatus described above, wherein the main link is provided with a groove-shaped or rib-shaped cam on each of the first surface and the second surface, the plurality of doors each include a door rotating shaft rotatably supported by the air conditioning case, a door body arranged on the air passage and rotating integrally with the door rotating shaft, and a lever fixed to the door rotating shaft, and the plurality of intermediate links each couple the cam and the lever.

A third aspect of the invention is directed to the vehicle air conditioning apparatus described above, wherein the main link is provided with a plurality of cams on the first surface or the second surface thereof, and the plurality of cams partly overlap with each other in a radial direction of a circle having a center at the drive shaft.

In the case where the plurality of cams are formed on the first surface or the second surface of the main link, that is, in the case where the plurality of cams are formed on the same surface, the plurality of cams are formed so as to partly overlap with each other in the radial direction of the circle having the center at the drive shaft, a reduction in size of the main link is further enabled.

A fourth aspect of the invention is directed to the vehicle air conditioning apparatus described above, wherein, regarding the main link, in the plurality of cams, one of the cams is a defrosting cam that controls an opening degree of a blowing port for defrosting, and the other cam is a ventilation cam that controls an opening degree of a blowing port for ventilation.

The defrosting cam and the ventilation cam make door opening and closing actions opposite to each other in many cases and, in the case of being arranged in the overlapped manner in the radial direction of the main link on the identical surface of the main link, it is rational to select the defrosting cam and ventilation cam.

### EFFECTS OF THE INVENTION

According to the aspects of the invention, since both of the first surface side link supporting portion and the second surface side link supporting portion are arranged within a movable range of the main link, all of the link supporting portions of the intermediate links may be put together on the center-of-rotation side of the main link, and the link mechanism may be reduced in size.

In particular, according to the third aspect of the invention, in the case where the plurality of cams are formed on the first surface or the second surface of the main link, that is, in the case where the plurality of cams are formed on the identical surface, the plurality of cams are formed so as to partly overlap with each other in the radial direction of the circle having the center at the drive shaft, a reduction in size of the main link is further enabled.

In particular, in the fourth aspect of the invention, the reason why the defrosting cam and the ventilation cam are employed is that the defrosting cam and the ventilation cam make door opening and closing actions opposite to each other in many cases and, in the case of being arranged in the overlapped manner in the radial direction of the main link on the identical surface of the main link, it is rational to select the defrosting cam and the ventilation cam.

### BRIEF DESCRIPTION OF THE DRAWINGS

Fig. 1 is a perspective view schematically illustrating structures of a link mechanism, a door mechanism, and an air conditioning case according to Example 1;
Fig. 2 is a perspective view of the link mechanism of Example 1 in Fig. 1 illustrating a state in which a bracket and a motor are not provided;
Fig. 3 is a top view of the link mechanism of Example 1 in Fig. 2 illustrating a state viewed from a second surface side (a back of a surface facing the air conditioning case) of the main link;
Fig. 4 is a bottom view of the link mechanism of Example 1 in Fig. 2 illustrating a state viewed from a first surface side (a side facing the air conditioning case) of the main link;
Fig. 5A is an explanatory top view of the main link of Example 1 illustrating a state viewed from the second surface side (the back of the surface facing the air conditioning case) of the main link;
Fig. 5B is an explanatory bottom view of the main link of Example 1 illustrating a state viewed from the first surface side (a side facing the air conditioning case) of the main link;
Fig. 6 is a schematic view of the link mechanism of Example 1 in Fig. 1 illustrating a state viewed from a side;
Fig. 7 is an explanatory view for explaining part of an assembly process of the link mechanism of Example 1 in Fig. 1;
Fig. 8 is an explanatory view for explaining the assembly process of the link mechanism of Example 1 in Fig. 1 different from the assembly process described in conjunction with Fig. 7;
Fig. 9A is a perspective view of a modification of Example 1 illustrating a state in which the bracket and the motor are not provided;
Fig. 9B is a cross-sectional view of the modification of Example 1 illustrating a state of engagement between the main link and an intermediate link;
Fig. 10 is a schematic view of a link mechanism of Example 2 illustrating a state viewed from the side;
Fig. 11 is a schematic view of a link mechanism of Example 3 illustrating a state viewed from the side; and
Fig. 12 is a schematic view of a link mechanism of Example 4 illustrating a state viewed from the side.

### DESCRIPTION OF EMBODIMENTS

Hereinafter, examples of the present invention will be described with reference to attached drawings.

### Example 1

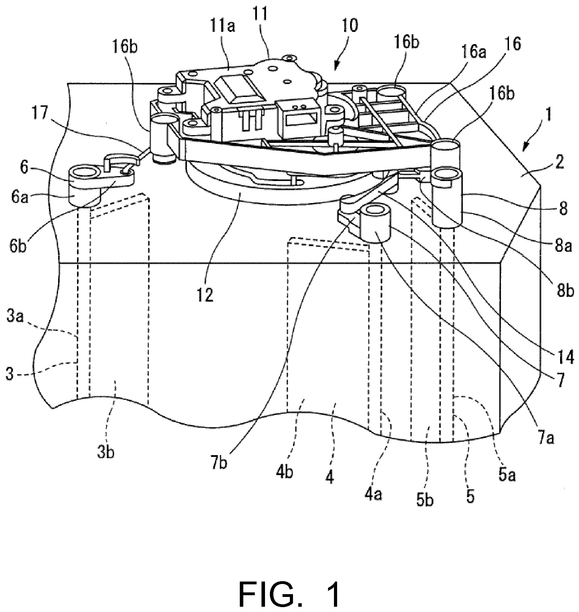

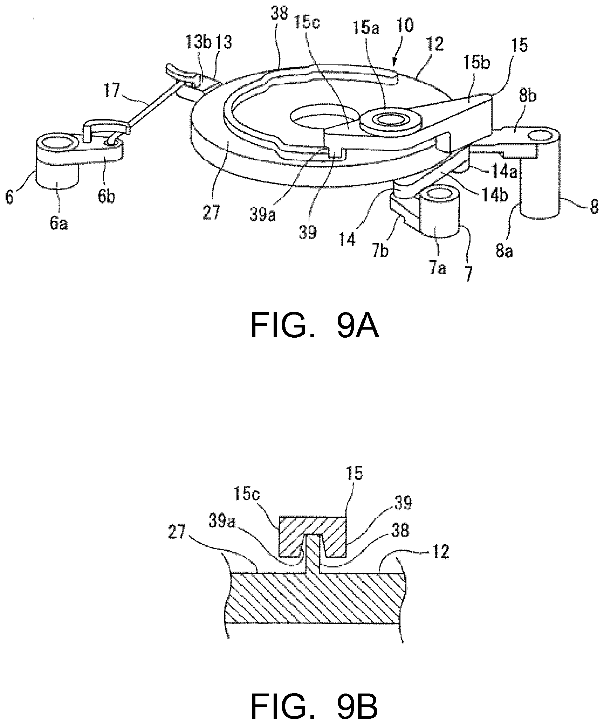

Fig. 1 to Fig. 8 illustrate Example 1 of the invention. Figs. 9A and 9B illustrate a modification of a cam of Example 1. Hereinafter, Example 1 and the modification of Example 1 will be described with reference to Fig. 1 to Fig. 9B.

Fig. 1 shows part of a vehicle air conditioning apparatus 1. The vehicle air conditioning apparatus 1 includes an air conditioning case 2 having an air passage inside thereof. In Example 1, at least three doors 3, 4, and 5 for controlling an air flow passing through the air passage are provided. The door 3 is, for example, a defrosting door, and the door 4 is, for example, a ventilation door, and the door 5 is, for example, a foot door.

The respective doors 3, 4, and 5 are arranged in proximity to each other, and include rod-shaped door rotating shafts 3a, 4a, and 5a and plate-shaped door bodies 3b, 4b, and 5b. The door rotating shafts 3a, 4a, and 5a are rotatably supported by the air conditioning case 2, and end portions thereof reach outside the air conditioning case. The configurations of the doors 3, 4, and 5 are not limited to a cantilever-type door composed of one door rotating shaft and one door body as illustrated in Fig. 1. Although not illustrated, either the butterfly type door including one door rotating shaft and two door bodies or a rotary type door including a pair of door rotating shafts and an arcuate peripheral surface is applicable.

The doors 3, 4, and 5 constitute a door mechanism in cooperation with levers 6, 7, and 8. The levers 6, 7, and 8 include cylindrical portions 6a, 7a, and 8a and extending portions 6b, 7b, and 8b extending from the cylindrical portions 6a, 7a, and 8a. The cylindrical portions 6a, 7a, and 8a are fixed with the end portions of the door rotating shafts 3a, 4a, and 5a outside the air conditioning case 2.

The vehicle air conditioning apparatus 1 includes a link mechanism 10 as a mechanism for rotating the doors 3, 4, and 5. The link mechanism 10 basically includes a motor 11 such as an electric motor, a main link 12, three intermediate links 13, 14, and 15, and a bracket 16 as illustrated in Fig. 1 to Fig. 4.

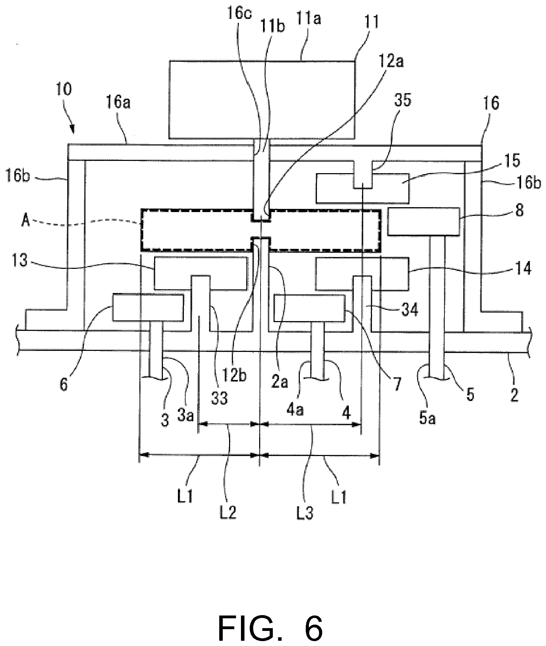

The motor 11 includes a motor body 11a, and a drive shaft 11b projecting from the motor body 11a as illustrated in Fig. 1 and Fig. 6. The motor body 11a is fixed to an outer surface of the bracket 16 (opposite side of the surface facing the air conditioning case 2). The drive shaft 11b is coupled to the main link 12 by penetrating through the bracket 16 and being fitted to a hole 12a of the main link 12. Accordingly, when the drive shaft 11b rotates, the main link 12 rotates integrally with the drive shaft 11b.

The main link 12 is a member for driving the intermediate links 13, 14, and 15. The material of the main link 12 is not specifically limited, but may be, for example, polypropylene, ABS resin, or a metal. The main link 12 is provided with a hole 12b formed on the side opposite to the hole 12a as illustrated in Fig. 6. The hole 12b is rotatably supported with respect to the air conditioning case 2 by being rotatably fitted on a main link supporting portion 2a extending from the air conditioning case 2. The main link supporting portion 2a is arranged on a coaxial line with the drive shaft 11b. The hole 12a and the hole 12b of the main link 12 may be communicated with each other.

In this manner, the bracket 16, the motor 11, and the main link 12 which constitute the link mechanism 10 are arranged so as to be stacked on the air conditioning case 2.

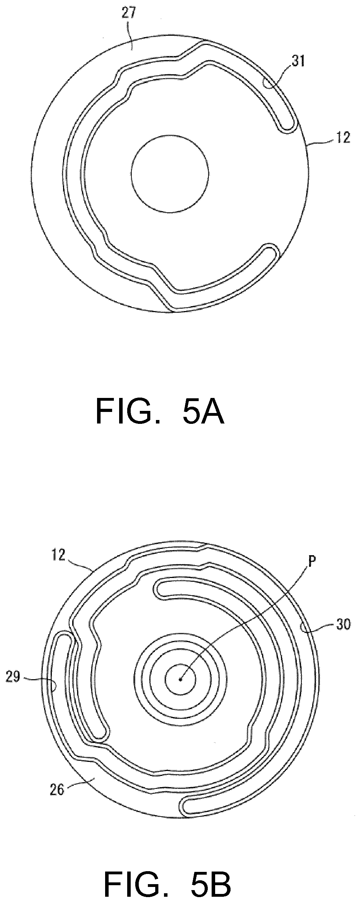

The main link 12 is illustrated as a disc shape of a true circle in Figs. 5A and 5B. However, the outer shape of the main link 12 is not limited to the disc shape of the true circle as long as the shape enables a formation of the link such as cam grooves 29 to 31 described later suitably.

The intermediate links 13, 14, and 15 are members for driving the doors 3, 4, and 5 via the levers 6, 7, and 8 by being interlocked with the rotation of the main link 12. The material of the intermediate links 13, 14, and 15 is, for example, polypropylene, ABS resin, and a metal, but is not specifically limited.

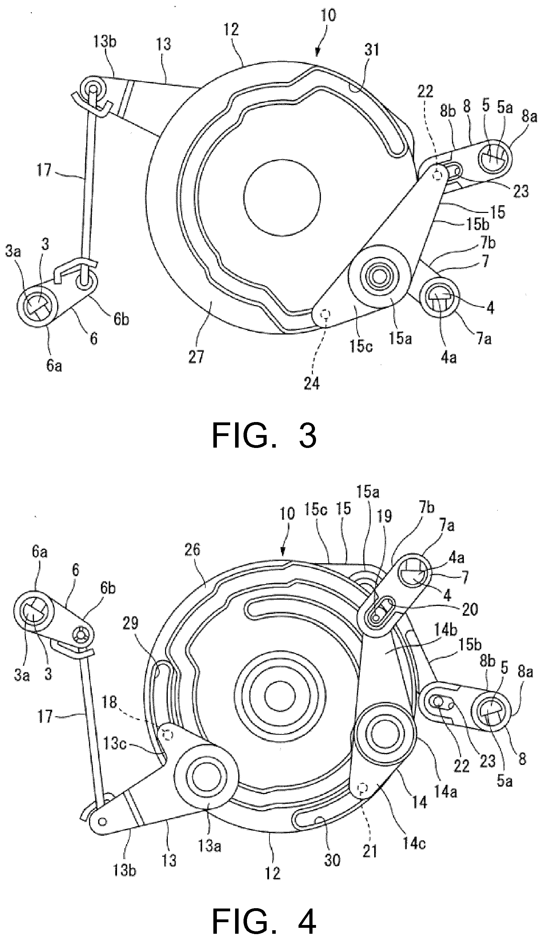

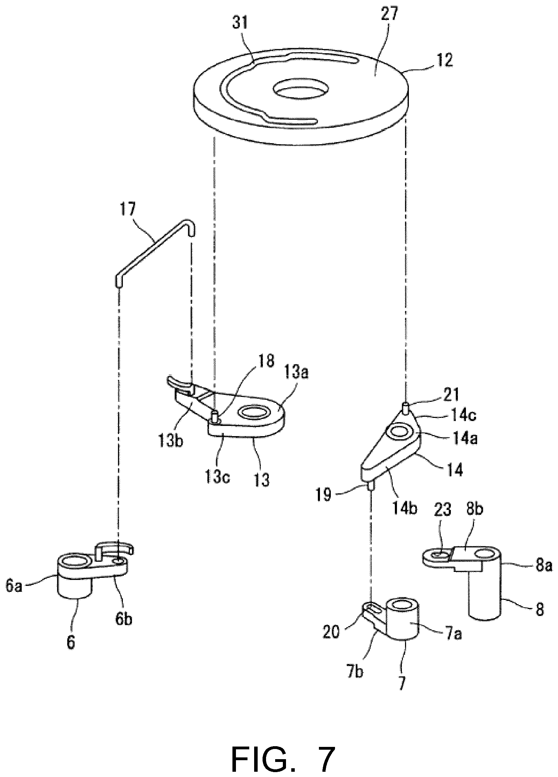

The intermediate link 13 includes a rotating shaft portion 13a and two extending portions 13b and 13c extending from the rotating shaft portion 13a as illustrated in Fig. 4 and Fig. 7. The extending portion 13b is coupled to the extending portion 6b of the lever 6 via a rod 17, and the extending portion 13c is formed with an insertion pin 18. The insertion pin 18 engages the cam groove 29 of the main link 12 described later.

The intermediate link 14 includes a rotating shaft potion 14a and two extending portions 14b and 14c extending from the rotating shaft potion 14a as illustrated in Fig. 4 and Fig. 7. The extending portion 14b includes an insertion pin 19 formed thereon, and the insertion pin 19 engages a link groove 20 formed on the extending portion 7b of the lever 7. The extending portion 14c is formed with an insertion pin 21, and the insertion pin 21 engages the cam groove 30 of the main link 12 described later.

The intermediate link 15 includes a rotating shaft portion 15a and two extending portions 15b and 15c extending from the rotating shaft portion 15a as illustrated in Fig. 3, Fig. 4, and Fig. 8. The extending portion 15b includes an insertion pin 22 formed thereon, and the insertion pin 22 engages a link groove 23 formed on the extending portion 8b of the lever 8. The extending portion 15c includes an insertion pin 24 formed thereon, and the insertion pin 24 engages the cam groove 31 of the main link 12, described later.

The bracket 16 fixes the motor 11, and includes a base portion 16a at a position farther from the air conditioning case 2 than the main link 12 and the intermediate links 13, 14, and 15 as illustrated in Fig.1 and Fig. 6. The base portion 16a is supported on the air conditioning case 2 by a plurality of column portions 16b. The column portions 16b need only to be provided at positions which do not interfere with a movable range of the main link 12, the intermediate links 13 to 15, and levers 6 to 8, and have high design flexibility. The material of the bracket 16 is not specifically limited, but maybe, for example, polypropylene, ABS resin, or a metal. The motor 11 is fixed to the outside of the base portion 16a of the bracket 16 (the side opposite to the surface facing the air conditioning case 2) in Example 1 as illustrated in Fig. 1. The bracket 16 is provided with a through hole 16c formed to allow the drive shaft 11b of the motor 11 to pass through as illustrated in Fig. 6. The motor 11 may be fixed to the inside of the base portion 16a (the side of the surface facing the air conditioning case 2), which is not illustrated.

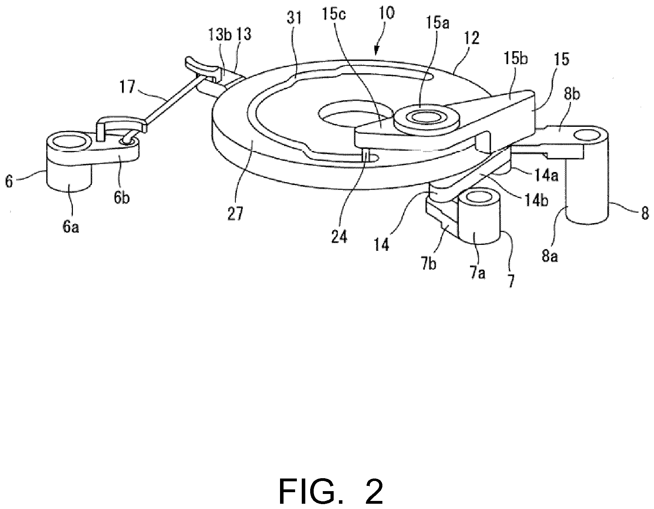

By the way, the main link 12 includes a first surface 26 facing the air conditioning case 2 and a second surface 27 facing the bracket 16 as illustrated in Fig. 2 to Fig. 5B. The intermediate links 13 and 14 are arranged between the first surface 26 of the main link 12 and the air conditioning case 2 as illustrated in Figs. 2 to 4 and Fig. 6. Therefore, the intermediate links 13 and 14 are referred to as first surface side intermediate links 13 and 14, hereinafter. In contrast, the intermediate link 15 is arranged between the second surface 27 of the main link 12 and the bracket 16 as illustrated in Figs. 2 to 4, and Fig. 6. Therefore, the intermediate link 15 is referred to as a second surface side intermediate link 15, hereinafter.

The main link 12 is provided with the cam groove 29 formed on the first surface 26, and the insertion pin 18 of the first surface side intermediate link 13 engages the cam groove 29 by being inserted thereto as illustrated in Fig. 4. In the same manner, the main link 12 is provided with the cam groove 30 formed on the first surface 26, and the insertion pin 21 of the first surface side intermediate link 14 engages the cam groove 30 by being inserted thereto as illustrated in Figs. 3, 4, and 5B. In contrast, the main link 12 is provided with the cam groove 31 formed on the second surface 27, and the insertion pin 24 of the second surface side intermediate link 15 engages the cam groove 31 by being inserted thereto as illustrated in Fig. 3.

Therefore, when the main link 12 rotates, the insertion pin 18 moves along the shape of the cam groove 29, so that the first surface side intermediate link 13 rotates about the rotating shaft portion 13a, and the lever 6 rotates by following the first surface side intermediate link 13, whereby the door 3 rotates. In the same manner, when the main link 12 rotates, the insertion pin 21 moves along the shape of the cam groove 30, so that the first surface side intermediate link 14 rotates about the rotating shaft portion 14a, and the lever 7 rotates by following the first surface side intermediate link 14, whereby the door 4 rotates. In the same manner, when the main link 12 rotates, the insertion pin 24 moves along the shape of the cam groove 31, so that the second surface side intermediate link 15 rotates about the rotating shaft portion 15a, and the lever 8 rotates by following the first surface side intermediate link 15, whereby the door 5 rotates.

Here, as illustrated in Fig. 5B, the cam groove 29 and the cam groove 30 are formed so as to overlap with each other in the radius direction of the circle having a center at the drive shaft 11b, that is, a center of rotation P of the main link 12. In other words, the cam groove 29 and the cam groove 30 are arranged so that the range of the phases of the cam grooves 29 and 30 overlap with each other. In association with it, the door 3 is configured to serve as a defrosting door and the door 4 is configured to serve as a ventilation door, the cam groove 29 functions as a cam groove for defrosting that controls the opening degree of the blowing port for defrosting, and the cam groove 30 functions as a cam groove for ventilation that controls the opening degree of the blowing port for ventilation. The defrosting door and the ventilation door are set so as to make door opening and closing actions opposite to each other in many cases, and may be formed so as to overlap in a radial direction of a circle having a center at the center of rotation P of the main link 12, which is preferable in terms of a reduction in size of the main link. For example, as a mode for opening the blowing port for ventilation, there is a ventilation mode and a bi-level mode. At this time, the blowing port for defrosting is set to be closed in many cases. As a mode for opening the blowing port for defrosting, there is a defrost mode and a foot-defrosting mode. At this time, the blowing port for ventilation is set to be closed in many cases.

The cylindrical portion 8a of the lever 8 projects outward of the air conditioning case 2 from the cylindrical portion 6a of the lever 6 and the cylindrical portion 7a of the lever 7 in order to allow coupling with the second surface side intermediate link 15 arranged on the second surface 27 side of the main link 12 as illustrated in Fig. 2.

The first surface side intermediate link 13 is rotatably supported by a first surface side link supporting portion 33 by the rotating shaft portion 13a being inserted into the first surface side link supporting portion 33 projecting from the air conditioning case 2 toward the bracket 16 as illustrated in Fig. 6. In the same manner, the first surface side intermediate link 14 is rotatably supported by a first surface side link supporting portion 34 by the rotating shaft portion 14a being inserted into the first surface side link supporting portion 34 projecting from the air conditioning case 2 toward the bracket 16 as illustrated in Fig. 6.

Here, a dimension L2 from the center of rotation of the main link 12 to the first surface side link supporting portion 33 is smaller than a dimension L1 from the center of rotation P of the main link 12 to an end of a maximum movable range of the main link 12 as illustrated in Fig. 6. In the same manner, a dimension L3 from the center of rotation P of the main link 12 to the first surface side link supporting portion 34 is smaller than the dimension L1 from the center of rotation P of the main link 12 to an end of the maximum movable range of the main link 12.

In contrast, the second surface side intermediate link 15 is rotatably supported by the second surface side link supporting portion 35 by the rotating shaft portion 15a being inserted into the second surface side link supporting portion 35 projecting from the bracket 16 toward the air conditioning case 2 as illustrated in Fig. 6.

Here, the second surface side link supporting portion 35 is capable of supporting the second surface side intermediate link 15 on the second surface 27 side of the main link 12, and hence the second surface side link supporting portion 35 does not hinder the rotation of the main link 12. Therefore, arrangement of the second surface side link supporting portion 35 outside the movable range (movable area) A of the main link 12 to avoid hindrance of rotation of the main link 12 is no longer necessary. In other words, the second surface side link supporting portion 35 may be arranged within the movable range A (inside the movable area) of the main link 12. Accordingly, the dimension L3 from the center of rotation P of the main link 12 to the second surface side link supporting portion 35 (which is equal to the dimension from the center of rotation of the main link 12 to the first surface side link supporting portion 34) may be smaller than a dimension L1 from the center of rotation of the main link 12 to an end of a maximum movable range of the main link 12 as illustrated in Fig. 6.

Therefore, since all of the link supporting portions 33 to 35 may be put together on the center of rotation P side of the main link 12, so that all of the intermediate links 13 to 15 supported by the link supporting portions 33 to 35 may be put together on the center of rotation P side of the main link 12. Accordingly, a reduction in size of the link mechanism 10 is achieved.

The link mechanism 10 of Example 1 has an advantage not only a reduction in size, but also the following. In other words, the second surface side link supporting portion 35 is formed on the bracket 16, and is not formed on the air conditioning case 2. Therefore, bypassing the position of installation of the first surface side link supporting portion 34 is not necessary. Therefore, a high design flexibility is achieved at the time of designing the second surface side link supporting portion.

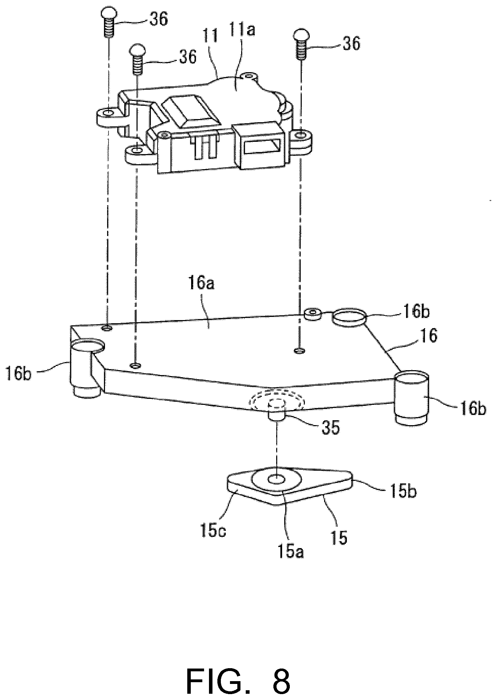

Subsequently, an assembly process for assembling the link mechanism in which the levers 6 to 8, the intermediate links 13 to 15, the main link 12, the bracket 16, and the motor 11 are assembled in a stacked manner will be described with reference to Fig. 7 and Fig. 8.

Fig. 7 illustrates one of assembly processes for assembling the link mechanism. In a first step, the levers 6, 7, and 8 are mounted on the air conditioning case 2. In a second step, the intermediate link 13 is mounted on the case 2, and the intermediate link 14 is mounted on the lever 7 and the lever 8. At this time, the insertion pin 19 of the intermediate link 14 is inserted into the link groove 20 of the lever 7. In a third step, the rod 17 is mounted on the lever 6 and the intermediate link 13. In a fourth step, the main link 12 is placed on the intermediate link 13 and the intermediate link 14. At this time, the insertion pin 18 of the intermediate link 13 is inserted into the cam groove 29 of the main link 12, and the insertion pin 21 of the intermediate link 14 is inserted into the cam groove 30 of the main link 12. Accordingly, one of sub-assemblies of the link mechanism is assembled.

Fig. 8 illustrates the other assembly process for assembling the link mechanism. In a fifth step, the motor 11 is fixed to the outside of the bracket 16 by a fixture 36 such as a bolt and the like. In a sixth step, the intermediate link 15 is mounted inside the bracket 16. Accordingly, the other subassembly of the link mechanism is assembled.

The other sub-assembly assembled in the fifth and sixth steps illustrated in Fig. 8 is moved toward the air conditioning case 2 with respect to the one of the sub-assemblies assembled in the first to fourth steps illustrated in Fig. 7, whereby one of the sub-assemblies and the other sub-assembly are assembled. At this time, the insertion pin 22 of the intermediate link 15 is inserted into the link groove 23 of the lever 8, and the insertion pin 24 of the intermediate link 15 is inserted into the cam groove 31 of the main link 12. The column portions 16b of the bracket 16 are fixed to the air conditioning case 2. Accordingly, the link mechanism 10 is assembled.

Although engagement between the main link 12 and the intermediate links 13 to 15 has been described as forming the cam grooves 29 to 31 on the main link 12 and forming the insertion pins 18, 21, and 24 which can be inserted into the cam grooves 29 to 31 on the intermediate links 13 to 15, the invention is not limited thereto.

As illustrated in Figs. 9A and 9B, a rib-shaped cam 38 projecting from the second surface 27 of the main link 12 in a vertical direction and extending in a ridge shape (rail shape) may be provided on the second surface 27 of the main link 12 instead of the cam groove 31 in Fig. 2 or Fig. 3. As illustrated in Figs. 9A and 9B, a projecting portion 39 having a depression 39a may be provided at a distal end on the extending portion 15c of the intermediate link 15 instead of the insertion pin 24. Accordingly, the intermediate link 15 may be coupled to the main link 12 on the second surface 27 side by mounting the depression 39a of the projecting portion 39 of the intermediate link 15 on the rib-shaped cam 38 formed on the second surface 27 of the main link 12.

Although not illustrated, a rib-shaped cam projecting from the first surface 26 of the main link 12 in the vertical direction and extending in the ridge shape (rail shape) may be formed respectively on the first surface 26 of the main link 12 in the same manner as the rib-shaped cam 38 instead of the cam grooves 29 and 30 in Fig. 4. Although not illustrated, a projection having a depression at distal ends thereof may be provided on the intermediate links 13 and 14 in the same manner as the projecting portion 39 instead of the insertion pins 18 and 21. With such a configuration, the intermediate links 13 and 14 may be coupled with the main link 12 on the first surface 26 side.

### Example 2

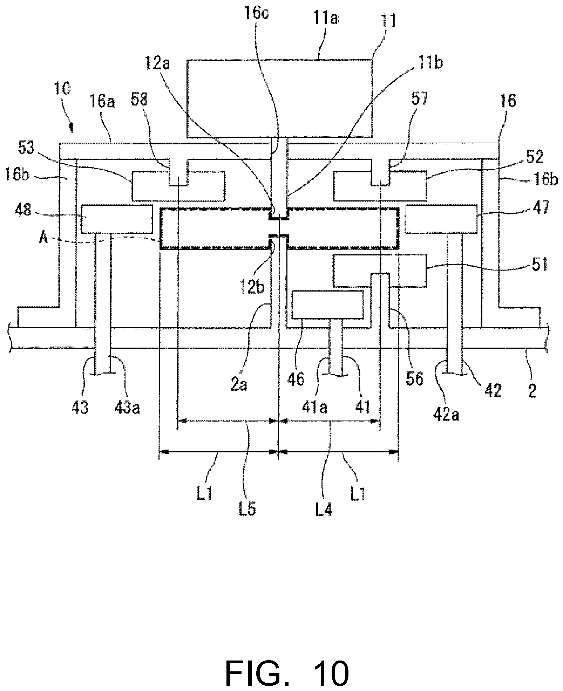

In Fig. 10, Example 2 of the invention will be described. Hereinafter, a configuration of the link mechanism 10 of Example 2 will be described with reference to Fig. 10. However, the same reference numerals are assigned to the configurations which are the same as those of Example 1, and description will be omitted.

The link mechanism 10 of Example 2 is for rotating three doors 41, 42, and 43 in proximity thereto by transmitting the rotation of the drive shaft 11b of the motor 11. The door 41 is, for example, a ventilation door, and the door 42 is, for example, a defrosting door, and the door 43 is, for example, a foot door. The doors 41, 42, and 43 include door rotating shafts 41a, 42a, and 43a, and may be a cantilever-type door, a butterfly type door, or a rotary type door.

The door rotating shaft 41a of the door 41 is coupled to a lever 46, and the lever 46 is coupled to an intermediate link 51, and the intermediate link 51 is coupled to the main link 12 (only the movable range A of the main link 12 is illustrated in Fig. 10, hereinafter). The door rotating shaft 42a of the door 42 is coupled to a lever 47, and the lever 47 is coupled to an intermediate link 52 and the intermediate link 52 is coupled to the main link 12. In addition, the door rotating shaft 43a of the door 43 is coupled to a lever 48, and the lever 48 is coupled to an intermediate link 53, and the intermediate link 53 is coupled to the main link 12.

The intermediate link 51 is arranged between the first surface 26 of the main link 12 and the air conditioning case 2. The intermediate link 51 is referred to as a first surface side intermediate link 51, hereinafter. In contrast, intermediate links 52 and 53 are arranged between the second surface 27 of the main link 12 and the bracket 16. Therefore, the intermediate links 52 and 53 are referred to as second surface side intermediate links 52 and 53, hereinafter.

The first surface side intermediate link 51 is rotatably supported by a first surface side link supporting portion 56 projecting from the air conditioning case 2 toward the bracket 16. The second surface side intermediate link 52 is rotatably supported by a second surface side link supporting portion 57 projecting from the bracket 16 toward the air conditioning case 2. In addition, the second surface side intermediate link 53 is rotatably supported by a second surface side link supporting portion 58 projecting from the bracket 16 toward the air conditioning case 2.

Accordingly, a dimension L4 from the center of rotation of the main link 12 to the first surface side link supporting portion 56 is smaller than the dimension L1 from the center of rotation of the main link 12 to an end of the movable range (movable area) A of the main link 12.

Also, a dimension L4 from the center of rotation of the main link 12 to the second surface side link supporting portion 57 is smaller than the dimension L1 from the center of rotation of the main link 12 to an end of the movable range (movable area) A of the main link 12. In the same manner, a dimension L5 from the center of rotation of the main link 12 to the second surface side link supporting portion 58 is smaller than the dimension L1 from the center of rotation of the main link 12 to an end of the movable range (movable area) A of the main link 12.

Therefore, since all of the link supporting portions 56 to 58 may be put together on the center of rotation P side of the main link 12, so that all of the intermediate links 51 to 53 supported by the link supporting portions 56 to 58 may be put together on the center of rotation P side of the main link 12. Accordingly, a reduction in size of the link mechanism 10 is achieved in Example 2 as well.

### Example 3

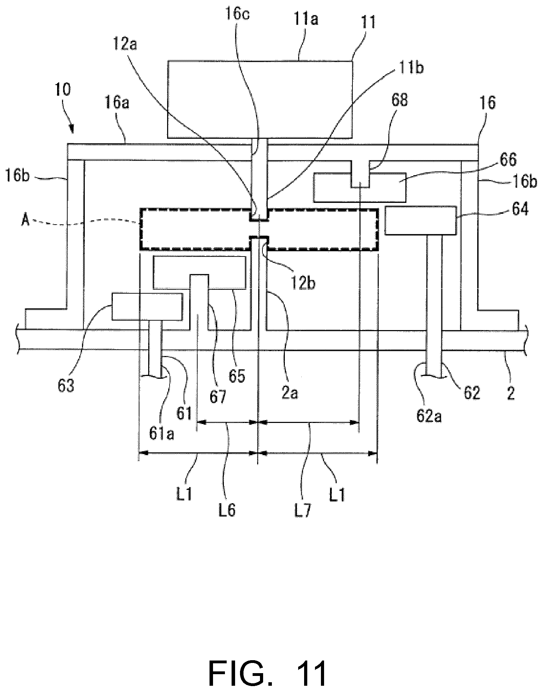

In Fig. 11, Example 3 of the invention will be described. Hereinafter, a configuration of the link mechanism 10 of Example 3 will be described with reference to Fig. 11. However, the same reference numerals are assigned to the configurations which are the same as those of Example 1 and Example 2, and description will be omitted.

The link mechanism 10 of Example 3 is for rotating two doors 61 and 62 in proximity thereto by transmitting the rotation of the drive shaft 11b of the motor 11. The door 61 is, for example, an air-mixed door and the door 62 is, for example, a wind distributing door. The doors 61 and 62 include door rotating shafts 61a and 62a, and may be a cantilever-type door, a butterfly type door, or a rotary type door.

The door rotating shaft 61a of the door 61 is coupled to a lever 63, and the lever 63 is coupled to an intermediate link 65, and the intermediate link 65 is coupled to the main link 12 (only the movable range A of the main link 12 is illustrated in Fig. 11, hereinafter). The door rotating shaft 62a of the door 62 is coupled to a lever 64, and the lever 64 is coupled to an intermediate link 66 and the intermediate link 66 is coupled to the main link 12.

The intermediate link 65 is arranged between the first surface 26 of the main link 12 and the air conditioning case 2. The intermediate link 65 is referred to as a first surface side intermediate link 65, hereinafter. In contrast, the intermediate link 66 is arranged between the second surface 27 of the main link 12 and the bracket 16. The intermediate link 66 is referred to as a second surface side intermediate link 66, hereinafter.

The first surface side intermediate link 65 is rotatably supported by a first surface side link supporting portion 67 projecting from the air conditioning case 2 toward the bracket 16. The second surface side intermediate link 66 is rotatably supported by a second surface side link supporting portion 68 projecting from the bracket 16 toward the air conditioning case 2.

Accordingly, a dimension L6 from the center of rotation of the main link 12 to the first surface side link supporting portion 67 is smaller than the dimension L1 from the center of rotation of the main link 12 to an end of the movable range (movable area) A of the main link 12.

Also, a dimension L7 from the center of rotation of the main link 12 to the second surface side link supporting portion 68 is smaller than the dimension L1 from the center of rotation of the main link 12 to an end of the movable range (movable area) A of the main link 12.

Therefore, since all of the link supporting portions 67 and 68 may be put together on the center of rotation P side of the main link 12, so that all of the intermediate links 65 and 66 supported by the link supporting portions 67 and 68 may be put together on the center of rotation P side of the main link 12. Accordingly, a reduction in size of the link mechanism 10 is achieved in Example 3 as well.

### Example 4

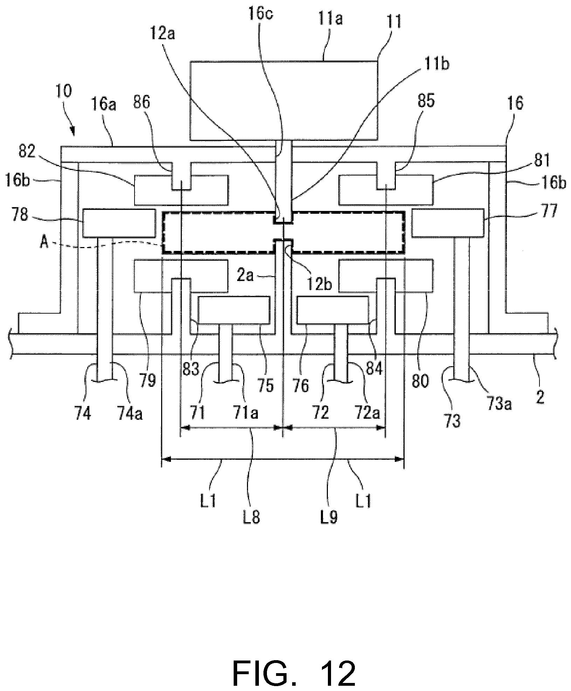

In Fig. 12, Example 4 of the invention will be described. Hereinafter, a configuration of the link mechanism 10 of Example 4 will be described with reference to Fig. 12. However, the same reference numerals are assigned to the configurations which are the same as those of Example 1, Example 2 or Example 3, and description will be omitted.

The link mechanism 10 of Example 3 is for rotating four doors 71 to 74 in proximity thereto by transmitting the rotation of the drive shaft 11b of the motor 11. The door 71 is, for example, a defrosting door, the door 72 is, for example, a ventilation door, the door 73 is, for example, a foot door, and the door 74 is, for example, other types of air-conditioning door, such as a wind distributing door or an internal and external air switching door. The doors 71 to 74 include door rotating shafts 71a to 74a, and may be a cantilever-type door, a butterfly type door, or a rotary type door.

The door rotating shaft 71a of the door 71 is coupled to a lever 75, and the lever 75 is coupled to an intermediate link 79, and the intermediate link 79 is coupled to the main link 12 (only the movable range A of the main link 12 is illustrated in Fig. 12, hereinafter). The door rotating shaft 72a of the door 72 is coupled to a lever 76, and the lever 76 is coupled to an intermediate link 80 and the intermediate link 80 is coupled to the main link 12. In addition, the door rotating shaft 73a of the door 73 is coupled to a lever 77, and the lever 77 is coupled to an intermediate link 81, and the intermediate link 81 is coupled to the main link 12. In addition, a door rotating shaft 74a of the door 74 is coupled to a lever 78, and the lever 78 is coupled to an intermediate link 82 and the intermediate link 82 is coupled to the main link 12.

The intermediate link 79 is arranged between the first surface 26 of the main link 12 and the air conditioning case 2. The intermediate link 79 is referred to as a first surface side intermediate link 79, hereinafter. The intermediate link 80 is also arranged between the first surface 26 of the main link 12 and the air conditioning case 2. The intermediate link 80 is referred to as a first surface side intermediate link 80, hereinafter. In contrast, the intermediate link 81 is arranged between the second surface 27 of the main link 12 and the bracket 16. The intermediate link 81 is referred to as a second surface side intermediate link 81, hereinafter. The intermediate link 82 is also arranged between the second surface 27 of the main link 12 and the bracket 16. The intermediate link 82 is referred to as a second surface side intermediate link 82, hereinafter.

Accordingly, a dimension L8 from the center of rotation of the main link 12 to a first surface side link supporting portion 83 is smaller than the dimension L1 from the center of rotation of the main link 12 to an end of the movable range (movable area) A of the main link 12.

Also, a dimension L9 from the center of rotation of the main link 12 to a first surface side link supporting portion 84 is smaller than the dimension L1 from the center of rotation of the main link 12 to an end of the movable range (movable area) A of the main link 12.

In addition, a dimension L9 from the center of rotation of the main link 12 to a second surface side link supporting portion 85 is smaller than the dimension L1 from the center of rotation of the main link 12 to an end of the movable range (movable area) A of the main link 12.

Also, a dimension L8 from the center of rotation of the main link 12 to a second surface side link supporting portion 86 is smaller than the dimension L1 from the center of rotation of the main link 12 to an end of the movable range (movable area) A of the main link 12.

Therefore, since all of the link supporting portions 83 to 86 may be put together on the center of rotation P side of the main link 12, so that all of the intermediate links 79 to 82 supported by the link supporting portions 83 to 86 may be put together on the center of rotation P side of the main link 12. Accordingly, a reduction in size of the link mechanism 10 is achieved in Example 4 as well.

### EXPLANATION OF REFERENCE SIGNS

1 vehicle air conditioning apparatus
2 air conditioning case
3, 4, 5 door
3a, 4a, 5a rod-shaped door rotating shaft
3b, 4b, 5b plate-shaped door body
6, 7, 8 lever
10 link mechanism
11 motor
11b drive shaft
12 main link
13 intermediate link (first surface side intermediate link)
14 intermediate link (first surface side intermediate link)
15 intermediate link (second surface side intermediate link)
16 bracket
17 rod
18 insertion pin
19 insertion pin
20 link groove
21 insertion pin
22 insertion pin
23 link groove
24 insertion pin
26 first surface of the main link
27 second surface of the main link
29 cam groove
30 cam groove
31 cam groove
33 first surface side link supporting portion
34 first surface side link supporting portion
35 second surface side link supporting portion
38 rib-shaped cam
39 projecting portion
39a depression
41, 42, 43, door
41a, 42a, 43a door rotating shaft
46, 47, 48 lever
51 intermediate link
52 intermediate link
53 intermediate link
56 first surface side link supporting portion
57 second surface side link supporting portion
58 second surface side link supporting portion
61, 62 door
61a, 62a door rotating shaft
63, 64 lever
65 intermediate link (first surface side intermediate link)
66 intermediate link (second surface side intermediate link)
67 first surface side link supporting portion
68 second surface side link supporting portion
71, 72, 73, 74 door
71a, 72a, 73a, 74a door rotating shaft
75, 76, 77, 78 lever
79 intermediate link (first surface side intermediate link)
80 intermediate link (first surface side intermediate link)
81 intermediate link (second surface side intermediate link)
82 intermediate link (second surface side intermediate link)
83 first surface side link supporting portion
84 first surface side link supporting portion
85 second surface side link supporting portion
86 second surface side link supporting portion
A movable range A of the main link
P center of rotation of the main link

## Claims

1. A vehicle air conditioning apparatus (1) comprising:
an air conditioning case (2) provided with an air passage inside thereof;
a bracket (16) to be fixed to the air conditioning case (2);
a motor (11) fixed to the bracket (2) and provided with a drive shaft (11b);
a main link (12) coupled to and rotated by the drive shaft (11b);
a plurality of doors (3,4,5) rotatably supported by the air conditioning case (2) and configured to control an air flow passing through the air passage; and
a plurality of intermediate links (13,14,15) coupled to the main link (12) and the doors (3,4,5), and configured to drive the plurality of doors (3,4,5) in conjunction with the rotation of the main link (12),
wherein the main link (12) includes a first surface (26) facing the air conditioning case (2) and a second surface (27) positioned on a back of the first surface (26),
the plurality of intermediate links (13,14,15) include a first surface side intermediate link (13,14) to be arranged between the first surface (26) and the air conditioning case (2), and a second surface side intermediate link (15) to be arranged on the second surface (27),
the first surface side intermediate link (13, 14) is rotatably supported by a first surface side link supporting portion (33,34) formed on the air conditioning case (2),
the second surface side intermediate link (15) is rotatably supported by a second surface side link supporting portion (35) formed on the bracket (16), **characterized in that**
the projections of the first surface side link supporting portion (33,34) and of the second surface side link supporting portion (35) in the plane of the main link are both arranged in a movable range of the main link (12),
wherein a dimension (L1, L2) from the center of rotation of the main link (12) to the first surface side link supporting portion (33,34) is smaller than a dimension (L1,L2) from the center of rotation of the main link (12) to an end of a maximum movable range of the main link (12), and a dimension (L3) from the center of rotation of the main link (12) to the second surface side link supporting portion (35) is smaller than a dimension (L1) from the center of rotation of the main link (12) to an end of a maximum movable range of the main link (12) .

2. The vehicle air conditioning apparatus (1) according to Claim 1,
wherein the main link (12) is provided with a groove-shaped or rib-shaped cam (29,30,31,32) on each of the first surface (26) and the second surface (27),
the plurality of doors (3,4,5) each include a door rotating shaft (3a,4a,5a) rotatably supported by the air conditioning case (2), a door body (3b,4b,5b) arranged on the air passage and rotating integrally with the door rotating shaft (3a,4a,5a), and a lever (6,7,8) fixed to the door rotating shaft (3a,4a,5a), and
the plurality of intermediate links (13,14,15) each couple the cam and the lever.

3. The vehicle air conditioning apparatus (1) according to Claim 2,
wherein a plurality of cams (29,30,31,32) are formed on the first surface (26) or the second surface (27), and the cams are formed so as to overlap partly in a radial direction of a circle having a center at the drive shaft (11b).

4. The vehicle air conditioning apparatus (1) according to Claim 3,
wherein in the plurality of cams,
one of the cams is a defrosting cam that controls an opening degree of a blowing port for defrosting, and
the other cam is a ventilation cam that controls an opening degree of the blowing port for ventilation.

## Patentansprüche

1. Fahrzeugklimaanlagenvorrichtung (1), umfassend:
ein Klimaanlagengehäuse (2), das in demselben mit einem Luftdurchlass versehen ist,
eine Halterung (16), die an dem Klimaanlagengehäuse (2) zu befestigen ist,
einen Motor (11), der an der Halterung (2) befestigt und mit einer Antriebswelle (11b) versehen ist,
ein Hauptverbindungsglied (12), das an die Antriebswelle (11b) gekoppelt ist und von dieser gedreht wird,
eine Vielzahl von Türen (3, 4, 5), die auf drehbare Weise von dem Klimaanlagengehäuse (2) getragen und dazu ausgelegt ist, einen Luftstrom zu regeln, der durch den Luftdurchlass strömt, und
eine Vielzahl von Zwischenverbindungsgliedern (13, 14, 15), die an das Hauptverbindungsglied (12) und die Türen (3, 4, 5) gekoppelt und dazu ausgelegt sind, die Vielzahl von Türen (3, 4, 5) in Verbindung mit der Drehung des Hauptverbindungsglieds (12) anzutreiben,
wobei das Hauptverbindungsglied (12) eine dem Klimaanlagengehäuse (2) zugewandte erste Fläche (26) und eine auf der Rückseite der ersten Fläche (26) befindliche zweite Fläche (27) umfasst,
wobei die Vielzahl von Zwischenverbindungsgliedern (13, 14, 15) ein auf der Seite der ersten Fläche befindliches Zwischenverbindungsglied (13, 14), das zwischen der ersten Fläche (26) und dem Klimaanlagengehäuse (2) anzuordnen ist, und ein auf der Seite der zweiten Fläche befindliches Zwischenverbindungsglied (15), das auf der zweiten Fläche (27) anzuordnen ist, umfasst,
wobei das auf der Seite der ersten Fläche befindliche Zwischenverbindungsglied (13, 14) von einem auf dem Klimaanlagengehäuse (2) ausgebildeten und auf der Seite der ersten Fläche befindlichen Verbindungsgliedtragabschnitt (33, 34) auf drehbare Weise getragen ist,
wobei das auf der Seite der zweiten Fläche befindliche Zwischenverbindungsglied (15) von einem auf der Halterung (16) ausgebildeten und auf der Seite der zweiten Fläche befindlichen Verbindungsgliedtragabschnitt (35) auf drehbare Weise getragen ist,
**dadurch gekennzeichnet, dass**
die Vorsprünge des auf der Seite der ersten Fläche befindlichen Verbindungsgliedtragabschnitts (33, 34) und des auf der Seite der zweiten Fläche befindlichen Verbindungsgliedtragabschnitts (35) in der Ebene des Hauptverbindungsglieds beide in einem Bewegungsbereich des Hauptverbindungsglieds (12) angeordnet sind,
wobei eine Abmessung (L1, L2) von dem Drehmittelpunkt des Hauptverbindungsglieds (12) bis zu dem auf der Seite der ersten Fläche befindlichen Verbindungsgliedtragabschnitt (33, 34) kleiner als eine Abmessung (L1, L2) von dem Drehmittelpunkt des Hauptverbindungsglieds (12) bis zu einem Ende eines maximalen Bewegungsbereichs des Hauptverbindungsglieds (12) ist und eine Abmessung (L3) von dem Drehmittelpunkt des Hauptverbindungsglieds (12) bis zu dem auf der Seite der zweiten Fläche befindlichen Verbindungsgliedtragabschnitt (35) kleiner als eine Abmessung (L1) von dem Drehmittelpunkt des Hauptverbindungsglieds (12) bis zu einem Ende eines maximalen Bewegungsbereichs des Hauptverbindungsglieds (12) ist.

2. Fahrzeugklimaanlagenvorrichtung (1) nach Anspruch 1,
wobei das Hauptverbindungsglied (12) mit einem nutförmigen oder rippenförmigen Nocken (29, 30, 31, 32) auf jeweils der ersten Fläche (26) und der zweiten Fläche (27) versehen ist,
wobei die Vielzahl von Türen (3, 4, 5) jeweils eine von dem Klimaanlagengehäuse (2) auf drehbare Weise getragene Türdrehwelle (3a, 4a, 5a), einen an dem Luftdurchlass angeordneten und sich einstückig mit der Türdrehwelle (3a, 4a, 5a) drehenden Türkörper (3b, 4b, 5b) und einen an der Türdrehwelle (3a, 4a, 5a) befestigten Hebel (6, 7, 8) umfasst, und
wobei die Vielzahl von Zwischenverbindungsgliedern (13, 14, 15) jeweils den Nocken und den Hebel koppeln.

3. Fahrzeugklimaanlagenvorrichtung (1) nach Anspruch 2,
wobei eine Vielzahl von Nocken (29, 30, 31, 32) auf der ersten Fläche (26) oder der zweiten Fläche (27) ausgebildet ist und die Nocken so ausgebildet sind, dass sie sich in einer radialen Richtung eines Kreises, der einen Mittelpunkt an der Antriebswelle (11b) aufweist, zum Teil überlappen.

4. Fahrzeugklimaanlagenvorrichtung (1) nach Anspruch 3,
wobei in der Vielzahl von Nocken
einer der Nocken ein Enteisungsnocken ist, der einen Öffnungsgrad einer Blasöffnung zum Enteisen steuert, und
der andere Nocken ein Lüftungsnocken ist, der einen Öffnungsgrad der Blasöffnung zur Lüftung steuert.

## Revendications

1. Appareil de climatisation pour véhicule (1), comprenant:
une enceinte de climatisation (2) pourvue d'un passage d'air à l'intérieur de celle-ci;
un console (16) à fixer à l'enceinte de climatisation (2) ;
un moteur (11) fixé à la console (2) et pourvu d'un arbre d'entraînement (11b) ;
une liaison principale (12) couplée à et mise en rotation par l'arbre d'entraînement (11b) ;
une pluralité de portes (3, 4, 5) supportées de façon rotative par l'enceinte de climatisation (2) et configurées de manière à commander un écoulement d'air qui passe à travers le passage d'air; et
une pluralité de liaisons intermédiaires (13, 14, 15) couplées à la liaison principale (12) et aux portes (3, 4, 5), et configurées de manière à entraîner la pluralité de portes (3, 4, 5) en conjonction avec la rotation de la liaison principale (12),
dans lequel la liaison principale (12) présente une première surface (26) en face de l'enceinte de climatisation (2) et une seconde surface (27) positionnée au dos de la première surface (26),
la pluralité de liaisons intermédiaires (13, 14, 15) comprend une première liaison intermédiaire côté surface (13, 14) à agencer entre la première surface (26) et l'enceinte de climatisation (2), et une seconde liaison intermédiaire côté surface (15) à agencer sur la seconde surface (27),
la première liaison intermédiaire côté surface (13, 14) est supportée de façon rotative par une première partie de support de liaison côté surface (33, 34) formée sur l'enceinte de climatisation (2),
la seconde liaison intermédiaire côté surface (15) est supportée de façon rotative par une seconde partie de support de liaison côté surface (35) formée sur la console (16),
**caractérisé en ce que**
les projections de la première partie de support de liaison côté surface (33, 34) et de la seconde partie de support de liaison côté surface (35) dans le plan de la liaison principale sont toutes les deux agencées dans une plage mobile de la liaison principale (12),
dans lequel une dimension (L1, L2) entre le centre de rotation de la liaison principale (12) et la première partie de support de liaison côté surface (33, 34) est plus petite qu'une dimension (L1, L2) entre le centre de rotation de la liaison principale (12) et une extrémité d'une plage mobile maximum de la liaison principale (12), et une dimension (L3) entre le centre de rotation de la liaison principale (12) et la seconde partie de support de liaison côté surface (35) est plus petite qu'une dimension (L1) entre le centre de rotation de la liaison principale (12) et une extrémité d'une plage mobile maximum de la liaison principale (12).

2. Appareil de climatisation pour véhicule (1) selon la revendication 1, dans lequel
la liaison principale (12) est pourvue d'une came en forme de rainure ou en forme de nervure (29, 30, 31, 32) sur chacune de la première surface (26) et de la seconde surface (27),
la pluralité de portes (3, 4, 5) comprennent chacune un arbre de rotation de porte (3a, 4a, 5a) qui est supporté de façon rotative par l'enceinte de climatisation (2), un corps de porte (3b, 4b, 5b) qui est agencé sur le passage d'air et qui tourne intégralement avec l'arbre de rotation de porte (3a, 4a, 5a), et un levier (6, 7, 8) qui est fixé à l'arbre de rotation de porte (3a, 4a, 5a), et
la pluralité de liaisons intermédiaires (13, 14, 15) couplent chacune la came et le levier.

3. Appareil de climatisation pour véhicule (1) selon la revendication 2, dans lequel une pluralité de cames (29, 30, 31, 32) sont formées sur la première surface (26) ou la seconde surface (27), et les cames sont formées de manière à se chevaucher partiellement dans une direction radiale d'un cercle qui présente un centre au niveau de l'arbre d'entraînement (11b).

4. Appareil de climatisation pour véhicule (1) selon la revendication 3, dans lequel, dans la pluralité de cames:
une des cames est une came de dégivrage qui commande un degré d'ouverture d'un port de soufflage pour le dégivrage, et
l'autre came est une came de ventilation qui commande un degré d'ouverture du port de soufflage pour la ventilation.
